# EUROPEAN PATENT SPECIFICATION

(11) **EP 2 868 559 B1**
(45) Date of publication and mention of the grant of the patent: **21.06.2017**
(21) Application number: 14189889.0
(22) Date of filing: 22.10.2014
(51) Int. Cl.: B62K 11/14, B62K 23/02

(54) **Saddle type vehicle**
Sattelfahrzeug
Véhicule du type à selle

(30) Priority: 31.10.2013 JP 2013227013
(43) Date of publication of application: 06.05.2015
(73) Proprietor: Yamaha Hatsudoki Kabushiki Kaisha, Iwata-shi, Shizuoka 438-8501 (JP)
(72) Inventor: Yagi, Toshiki, Iwata-shi, Shizuoka 438-8501 (JP); Watanabe, Takashi, Iwata-shi, Shizuoka 438-8501 (JP); Makino, Kazuyuki, Iwata-shi, Shizuoka 438-8501 (JP)
(74) Representative: Grünecker Patent- und Rechtsanwälte PartG mbB

(56) References cited:
- JP-A- 2003 341 376
- JP-U- S5 879 483

## Description

### BACKGROUND OF THE INVENTION

The present invention relates to a saddle type vehicle including an input device provided to a handlebar unit.

Conventionally, a saddle type vehicle such as a motorcycle includes a switch device (an input device) located in the vicinity of a grip of a handlebar unit. The switch device is provided with an operation member configured to be operated with a finger which is not used to grip the grip, while the grip is gripped. Such a saddle type vehicle is also known from JP 2003-341376 A and JP S58-79483 U. In particular one embodiment of JP 2003-341376 A discloses a saddle type vehicle comprising a handlebar unit provided forward of a seat in a vehicle forward/rearward direction, the seat held by a vehicle body frame, a left grip portion and a right grip portion respectively provided on a left end portion and a right end portion of the handlebar unit, and an input device provided to the handlebar unit, wherein the input device is configured to be operable with a palmar side of a thumb of a hand gripping one of the left grip portion and the right grip portion, the input device comprises a case and a rotating body being a disk-like member including an operational surface arranged in a circumferential direction, extending continuously only along a part of the circumference of the rotating body and being completely positioned outside of the case.

For the switch device of the saddle type vehicle, a variety of operation members have been devised. Examples of these include a push operation member and a slide operation member, as described in Japanese Unexamined Patent Publication No. 2013-028294. The examples further include a rotary operation member as described in European Patent No. 1508480.

### SUMMARY OF THE INVENTION

The switch device (input device) is provided to the handlebar unit. Therefore, the operation member of the switch device has to avoid interference with the handlebar unit while maintaining operability. Therefore, it is preferable that the operation member provided to the handlebar unit has a high degree of freedom in shape.

In view of the above, an object of the present invention is to provide a saddle type vehicle including an input device which has a high degree of freedom in shape while maintaining operability and is able to easily avoid interference with a handlebar unit. Such an object is achieved by a saddle type vehicle according to claim 1.

A saddle type vehicle according to an embodiment of the present invention is described in independent claim 1.

In this structure, the input device includes the case, and the rotating body including the operational surface arranged in the circumferential direction, a portion of which is accommodated in the case and the remaining portion of which is exposed to the outside of the case. The rotating body is disposed so as to be rotatable about the axis extending in the direction orthogonal to (i) the thumb thickness direction (direction of the thickness of the thumb) and (ii) the nail length direction (direction of the length of the nail) of the thumb which is of the hand gripping the grip portion and is in contact with the portion of the operational surface which is exposed to the outside of the case. Further, the rotating body is rotationally operated by flexing and/or extending the thumb of the hand gripping the grip portion while the palmar side of the thumb is in contact with the portion of the operational surface which is exposed to the outside of the case so that the thumb thickness direction and the nail length direction of the thumb respectively extend in the directions orthogonal to the axis.

Different rotational angles of the rotating body respectively correspond to different operation amounts to be input. This allows the rotating body to be used for a wider variety of input operations than a push or slide operation member, leading to its good operability.

However, since the input device is provided to the handlebar unit, it is necessary to avoid interference between the rotating body and the handlebar unit.

Therefore, according to the present teaching, flexion and/or extension of the thumb is used to operate the rotating body, to easily avoid interference between the rotating body and the handlebar unit while maintaining operability. The thumb is easily moved even while the grip portion is gripped with other fingers (fingers other than the thumb among five fingers), and therefore it is suitable for operation of the rotating body. Further, in flexion-extension movement, it is easy to slightly move the thumb even while the grip portion is gripped with the other fingers, and therefore it is easy to slightly adjust the rotational angle of the rotating body. Moreover, the thumb can be flexed and extended not only at the first joint (IP joint) and the second joint (MCP joint) which are closer to the tip of the thumb, but also at the third joint (the third joint from the tip: CMC joint) which is closer to the wrist. Accordingly, the range of movement of the distal end of the thumb caused by flexion and/or extension of the thumb is large. Therefore, irrespective of the diameter of the operational surface, the rotating body is easily operated by flexion and/or extension of the thumb. This makes it possible to freely determine the diameter of the operational surface (the outer diameter of the rotating body) while maintaining operability of the rotating body. Further, since the range of movement of the distal end of the thumb caused by flexion and/or extension of the thumb is large, it is possible to increase an operation amount in each operation by increasing the circumferential length of the portion of the operational surface which is exposed to the outside of the case.

It is assumed that a direction from the nail to the palmar side of the thumb which is extended in the longitudinal direction of the grip portion while the grip portion is gripped with fingers other than the thumb is a forward direction, and that a direction opposite to the forward direction is a rearward direction. It is possible to swing the thumb around an axis extending in this forward/rearward direction while the grip portion is gripped with the fingers other than the thumb, and therefore flexion and/or extension of the thumb is possible within this swing range. Further, since the rotating body is rotationally operated by flexion and/or extension of the thumb while the grip portion is gripped with the fingers other than the thumb, the rotation axis of the rotating body extends in a direction crossing the longitudinal direction of the grip portion when viewing the input device from the forward direction.

Due to the fact that the rotation axis of the rotating body extends in the direction crossing the longitudinal direction of the grip portion when viewing the input device from the forward direction, and that there is freedom in determining the diameter of the rotating body, interference between the rotating body and the handlebar unit is easily avoided. Moreover, since flexion and/or extension of the thumb is/are possible within the swing range, operability of the rotating body is maintained while avoiding interference between the rotating body and the handlebar unit.

Further, according to the present teaching, while the grip portion is gripped with the fingers other than the thumb, it is possible to bring the palmar side of the thumb into contact with the portion of the operational surface which is exposed to the outside of the case so that the thumb thickness direction and the nail length direction of the thumb respectively extend in the directions orthogonal to the rotation axis of the rotating body. This facilitates the rotational operation of the rotating body by flexion and/or extension of the thumb.

Note that, the forward/rearward direction on the assumption that the forward direction is the direction from the nail to the palmar side of the thumb which is of the hand gripping the grip portion and is extended in the longitudinal direction of the grip portion and that the rearward direction is the direction opposite to the forward direction may be parallel with the vehicle forward/rearward direction, or may be nonparallel with the vehicle forward/rearward direction. Further, according to the present teaching, "the axis extending in the direction orthogonal to the thumb thickness direction and the nail length direction of the thumb" includes not only the case where the axis is completely parallel with the direction orthogonal to the thumb thickness direction and to the nail length direction, but also the case where the axis is slightly inclined with respect to the orthogonal direction. Likewise, according to the present teaching, the expression "the thumb thickness direction and the nail length direction of the thumb respectively extend in directions orthogonal to the axis" includes not only the case where the thumb thickness direction and the nail length direction are completely parallel with the directions orthogonal to the axis, respectively, but also the case where the thumb thickness direction and the nail length direction are slightly inclined with respect to the directions orthogonal to the axis, respectively.

Further, according to the present teaching and in this Specification, "to grip the grip portion" means that a rider seated on the seat of the saddle type vehicle grips the grip portion in a riding posture.

Further, according to the present teaching and in this Specification, "the hand gripping the grip portion" includes not only the case where an eminence at the base of the thumb (i.e., thenar) is in contact with the grip portion, but also the case where the thenar is not in contact with the grip portion.

Furthermore, according to the present teaching and in this Specification, "the thumb is in contact with the operational surface" includes not only the case where the operational surface is touched with a bare hand, but also the case where the operational surface is touched with a gloved hand.

In the saddle type vehicle of the present teaching, it is preferable that the input device includes a resistance applying unit configured to apply resistance to the rotation of the rotating body.

When the rotating body is successively rotated in one direction by repeating flexion-extension movement of the thumb multiple times, the rotating body is first rotated by flexion or extension, and then the thumb is extended or flexed while being raised to be separated from the operational surface, thereby to return the thumb back to its original position on the operational surface. Therefore, the thumb possibly contacts the rotating body on the way to returning the thumb back to its original position by raising the thumb. Such an incident is more likely to occur if gloved. However, according to the present teaching, the resistance applying unit applies resistance to the rotation of the rotating body, and this prevents the rotating body from being rotated merely by light touch of the thumb onto the rotating body. This improves operability of the rotating body.

In the saddle type vehicle of the present teaching, it is preferable that the resistance applying unit is configured to increase/decrease the resistance applied to the rotating body with respect to a rotation direction of the rotating body so that a click feeling is given to a rotational operation of the rotating body at intervals of a predetermined angle.

In this structure, the click feeling is given to the rotational operation of the rotating body at intervals of the predetermined angle, and this enables the rider to realize that the rotating body has been rotated the predetermined angle. This facilitates input operations in which a selected item is changed each time the rotating body is rotated the predetermined angle, for example.

In the saddle type vehicle of the present teaching, it is preferable that, in the rotating body, a width of the operational surface in a direction of the axis crossing the longitudinal direction of the corresponding one of the grip portions is smaller than a length of the portion of the operational surface which is exposed to the outside of the case in a direction orthogonal to the width when viewed from a direction orthogonal to a plane directly connecting both circumferential ends of the portion of the operational surface which is exposed to the outside of the case.

The circumferential length of the portion of the operational surface which is exposed to the outside of the case is determined taking into account a maximum rotational angle at which the rotating body is rotatable by one operation of flexion or extension of the thumb. From the diameter of the operational surface and the thus determined circumferential length of the portion of the operational surface which is exposed to the outside of the case, derived is the length of the portion of the operational surface which is exposed to the outside of the case in the direction orthogonal to the width of the operational surface when viewed from the direction orthogonal to the plane which directly connects the both circumferential ends of the portion of the operational surface which is exposed to the outside of the case (hereinafter, referred to as a linear length of an exposed portion of the operational surface). The linear length of the exposed portion of the operational surface is smaller than the circumferential length of the portion of the operational surface which is exposed to the outside of the case. According to the present teaching, the width of the operational surface is smaller than the linear length of the exposed portion of the operational surface. The smaller width of the operational surface allows a contact area between the thumb and the operational surface to be smaller. This results in a larger pressure per unit area on the contact area between the thumb and the operational surface. This helps the rider to realize which portion of the thumb contacts the operational surface, thereby further improving usability.

Further, the smaller width of the operational surface allows the rotating body to be installed in a smaller space. This helps the rotating body not interfere with the handlebar unit.

In the saddle type vehicle of the present teaching, it is preferable that: an entire outer circumferential surface of the rotating body forms the operational surface; and at least a part of each of both end surfaces of the rotating body which cross the axis crossing the longitudinal direction of the corresponding one of the grip portions is exposed to the outside of the case.

In this structure, the entire outer circumferential surface of the rotating body forms the operational surface, and at least a part of each of the both end surfaces of the rotating body which cross the axis is exposed to the outside of the case. This makes it possible to rotate the rotating body while the thumb is in contact with an edge of one of the both end surfaces of the rotating body (an edge of the operational surface). In this case, the pressure per unit area on the contact area between the thumb and the operational surface is larger than the case where the rotating body is rotated with the thumb surface-contacting the operational surface. This helps the rider to realize which portion of the thumb contacts the operational surface, thereby improving usability.

In the saddle type vehicle of the present teaching, it is preferable that: the operational surface of the rotating body is an uneven surface on which, in use, recesses and projections are arranged alternately with each other in a flexion/extension direction of the thumb of the hand gripping the corresponding one of the grip portions; and a groove width of each recess in the flexion/extension direction is designed to enable an edge of the recess to be pushed with the thumb of the hand gripping the corresponding one of the grip portions.

In this structure, the groove width of each recess, which is formed on the operational surface, in the flexion/extension direction of the thumb of the hand gripping the grip portion (i.e., the groove width in the circumferential direction of the operational surface) is designed to enable an edge of the recess to be pushed with the thumb of the hand gripping the gripping portion. Therefore, it is possible to rotate the rotating body by flexing and/or extending the thumb while pushing the edge of the recess (or a surface defining the recess) with the thumb. The thumb is thus caught on the recess, and this prevents the thumb from slipping in the circumferential direction. Therefore, operability of the rotating body is improved.

Note that, according to the present teaching and in this Specification the flexion/extension direction of the thumb is a direction in which the distal end of the thumb is moved by flexion and/or extension of the thumb.

In the saddle type vehicle of the present teaching, it is preferable that a plurality of small recesses each having a groove width smaller than that of each of the recesses are formed on the operational surface of the rotating body.

In this structure, the plurality of small recesses each having the smaller groove width than that of each of the recesses are formed on the operational surface. Therefore, when the rotating body is rotated by flexing and/or extending the thumb while the thumb is in contact with the operational surface, the small recesses prevent a slip of the thumb (the slip is not limited to a slip in the circumferential direction of the operational surface). This further improves operability of the rotating body.

In the saddle type vehicle of the present teaching, it is preferable that the rotating body is configured to be operable by pushing the rotating body with the thumb of the hand gripping the corresponding one of the grip portions in a predetermined direction orthogonal to the axis crossing the longitudinal direction of the corresponding one of the grip portions.

In this structure, the rotating body is operable not only through a rotational operation by flexion and/or extension of the thumb, but also through a pushing operation, and therefore three or more types of input operations are possible using the single rotating body.

In the saddle type vehicle of the present teaching, it is preferable that: the portion of the operational surface which is exposed to the outside of the case is positioned rearward of a central axis of the corresponding one of the grip portions, on an assumption that a direction from a nail to the palmar side of the thumb which is of the hand gripping the corresponding one of the grip portions and is extended in the longitudinal direction of the corresponding one of the grip portions is a forward direction and that a direction opposite to the forward direction is a rearward direction; and the rotating body is rotatable about the axis crossing the longitudinal direction of the corresponding one of the grip portions when viewing the input device in the forward direction.

Note that, according to the present teaching and in this Specification, the "direction from the nail to the palmar side of the thumb" refers to a direction from the nail to the palmar side of the thumb in a thickness direction of the thumb (the thumb thickness direction) orthogonal to a longitudinal direction of the thumb and to a width direction of the thumb.

### BRIEF DESCRIPTION OF THE DRAWINGS

FIG. 1 is a left side view of a motorcycle of a first preferred embodiment
FIG. 2 is a view from a direction of an arrow A of FIG. 1.
FIG. 3 is a perspective view of a right grip portion and an input device with the periphery thereof.
FIG. 4 is a view of the right grip portion and the input device with the periphery thereof, viewed from a direction P of FIG. 3.
FIG. 5 is a view of the right grip portion and the input device with the periphery thereof, viewed from a direction orthogonal to the direction P of FIG. 3 and to a longitudinal direction of the right grip portion.
FIG. 6 is a side view of the input device, viewed from the longitudinal direction of the right grip portion.
FIG. 7 is a partial enlarged right side view of the motorcycle.
FIG. 8A is a view of a rotating body of the input device with the periphery thereof, viewed from a direction orthogonal to a rotation axis of the rotating body and to the longitudinal direction of the right grip portion. FIG. 8B is a sectional view taken along a plane passing through the rotating body and orthogonal to the rotation axis of the rotating body.
FIG. 9 is a side view of an input device of a motorcycle of another preferred embodiment.
FIG. 10 is a side view of an input device of a motorcycle of another preferred embodiment.
FIG. 11 is a view of an input device of a motorcycle of another preferred embodiment, viewed from the direction P.
FIG. 12 is a view of the input device of the motorcycle of the above another preferred embodiment, viewed from the direction orthogonal to the direction P and to the longitudinal direction of the right grip portion.
FIG. 13 is a view of an input device of a motorcycle of another preferred embodiment, viewed from the direction orthogonal to the direction P and to the longitudinal direction of the right grip portion.
FIG. 14 is a schematic sectional view of an input device of a motorcycle of another preferred embodiment.

### DESCRIPTION OF THE PREFERRED EMBODIMENTS

The following describes an embodiment of a saddle type vehicle of the present teaching, with reference to a motorcycle 1, as an example.

### <Overall Structure of Motorcycle>

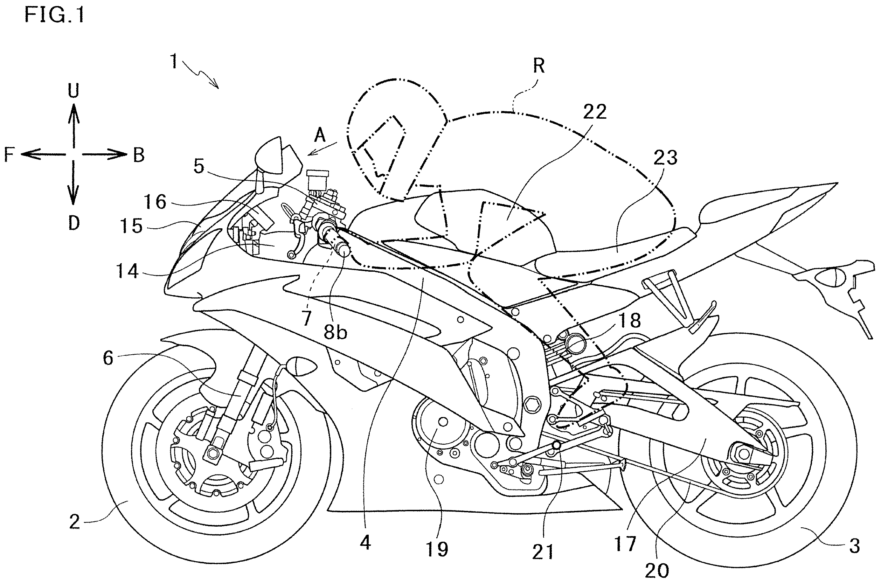

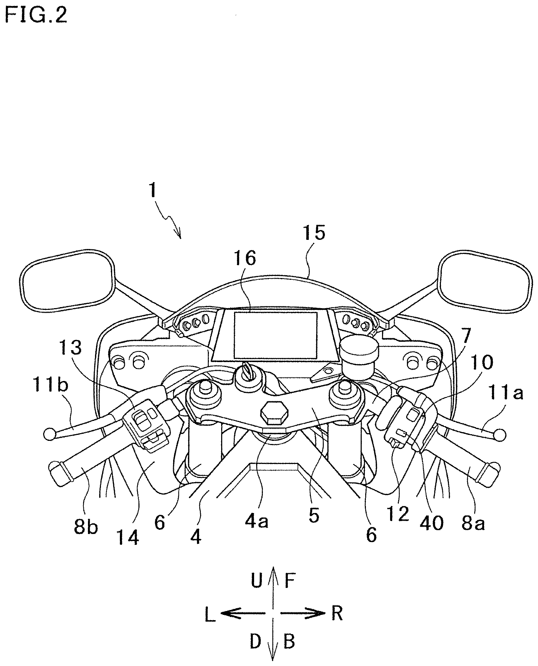

As shown in FIG. 1, the motorcycle 1 includes a front wheel 2, a rear wheel 3, and a vehicle body frame 4. Note that, in the following description for the overall structure of the motorcycle 1, a forward/rearward direction and a right/left direction are respectively a forward/rearward direction and a right/left direction, as seen from a rider R seated on a seat 23 (will be described later) of the motorcycle 1 (a vehicle forward/rearward direction and a vehicle right/left direction). An arrow F and an arrow B shown in FIG. 1 and FIGs. 2, 3, 5, 6, and 7 which will be referred to later respectively indicate a forward direction and a rearward direction in the vehicle forward/rearward direction. Further, an arrow U and an arrow D shown in FIG. 1 and FIGs. 2 to 4, 6, and 7 which will be referred to later respectively indicate an upward direction and a downward direction of the motorcycle 1. Furthermore, an arrow L and an arrow R shown in FIGs. 2 to 5 which will be referred to later respectively indicate a left direction and a right direction of the vehicle right/left direction. Note that, out of the arrows indicating the directions in each drawing of the present application, bold arrows indicate directions parallel to the surface of the sheet, and unbold arrows indicate directions not parallel to the surface of the sheet.

As shown in FIG. 2, a head pipe 4a is provided to a front portion of the vehicle body frame 4. In the head pipe 4a, a steering shaft (not shown) is rotatably inserted. A handle crown 5 is secured to an upper end of the steering shaft.

The handle crown 5 has right and left end portions, to which upper end portions of front forks 6 are respectively secured. Lower end portions of the front forks 6 support the front wheel 2. Each of the front forks 6 has a suspension (not shown) which absorbs shock in an up/down direction.

A handlebar unit 7 is secured to the upper end portions of the two front forks 6. The handlebar unit 7 includes two bars. One of the two bars included in the handlebar unit 7 extends left-down-rearward from the left end portion of the handle crown 5. The other bar extends right-down-rearward from the right end portion of the handle crown 5. The respective directions in which the bars of the handlebar unit 7 extend are not limited to those shown in FIGs. 1 and 2.

A right grip portion 8a and a left grip portion 8b are respectively attached to outer peripheries of a left end portion and a right end portion of the handlebar unit 7. Note that the left end portion of the handlebar unit 7 is a left end portion of the left bar, and the right end portion of the handlebar unit 7 is a right end portion of the right bar.

The right grip portion 8a is a throttle grip. To the right grip portion 8a, connected is throttle wire for adjusting the position of the throttle. Onto the handlebar unit 7, a throttle holder 10 accommodating the throttle wire is attached adjacent to the right grip portion 8a. Note that the throttle holder 10 does not have to be provided.

Further, a brake lever 11 a is attached to a right portion of the handlebar unit 7, and a clutch lever 11 b is attached to a left portion of the handlebar unit 7. To the brake lever 11a, a brake hose is connected. To the clutch lever 11 b, clutch wire for turning on and off a clutch is connected.

To the right portion of the handlebar unit 7, an input device 12 is provided, while to the left portion of the handlebar unit 7, an input device 13 is provided. The input device 12 is located to the left of and adjacent to the throttle holder 10. The input device 13 is located to the right of and adjacent to the left grip portion 8b. Each of the input devices 12 and 13 is provided with a plurality of switches. The switches of each of the input devices 12 and 13 are operated by a thumb of a hand gripping corresponding one of the grip portions 8a and 8b. The input device 12 is provided with a switch 40 of a rotary type, and corresponds to an input device of the present teaching. The detailed structure of the input device 12 will be described later.

A headlight unit 14 is located higher than the front wheel 2 and forward of the handlebar unit 7. A front face of the headlight unit 14 is covered with a front cowling 15. At the top of the headlight unit 14, a display device 16 is disposed. The display device 16 is located forward of the handlebar unit 7.

A swingarm 17 is swingably held, at its front end portion, by a rear portion of the vehicle body frame 4. Rear end portions of the swingarm 17 hold the rear wheel 3. Each of rear suspensions 18 which absorb shock in the up/down direction connects a portion of the swingarm 17 which is not a swingarm pivot to the vehicle body frame 4.

Further, on the vehicle body frame 4, an engine 19 is mounted. Rearward of the engine 19, there is disposed a transmission (not shown) having a plurality of speed-changing gears. The driving power of the engine 19 is transmitted to the rear wheel 3 via the transmission and a chain 20. To the left of the transmission, there is provided a shift pedal 21 for changing the gears of the transmission.

Rearward of the handlebar unit 7, a fuel tank 22 and the seat 23 are attached to an upper portion of the vehicle body frame 4. The seat 23 is located rearward of the fuel tank 22. The fuel tank 22 and the seat 23 are located higher than the engine 19.

The motorcycle 1 further includes a not-shown controller configured to control operation of each part of the motorcycle 1. The controller is coupled to the throttle grip (the right grip portion) 8a, the input devices 12 and 13, and the like. The motorcycle 1 further includes a battery (not shown) which supplies power to electronic equipment such as the controller, the display device 16, and various sensors.

### <Structure of Input Device>

The following describes the detailed structure of the input device 12.

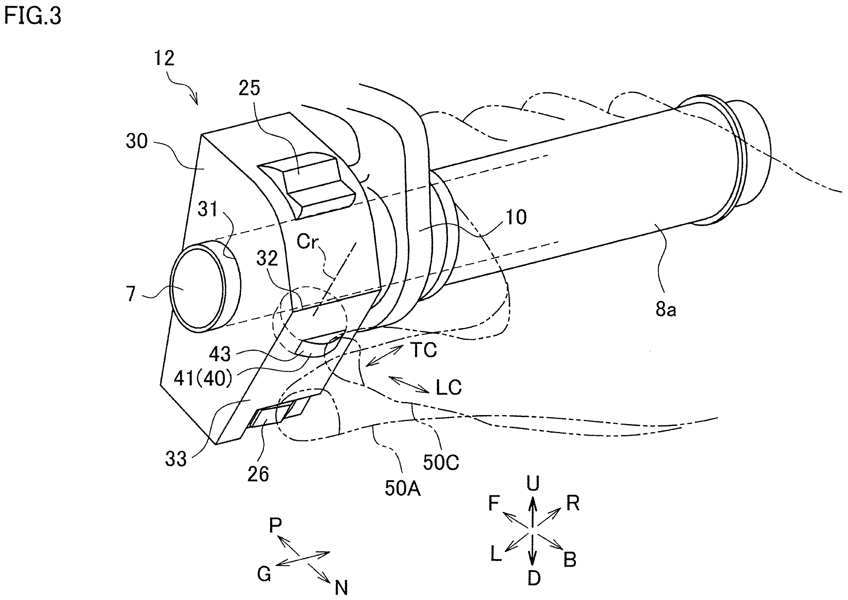

As shown in FIGs. 3 to 6, the input device 12 includes a case 30, a rotary push switch 40, a rocker switch 25, and a slide switch 26. The rotary push switch 40 is a switch operable through both operations of: a rotational operation in normal and reverse directions; and a pushing operation. The rocker switch 25 is a switch operable through the pushing operation. The slide switch 26 is a switch operable through a sliding operation. Note that either one or both of the rocker switch 25 and the slide switch 26 may be omitted from the input device 12. Further, instead of the rocker switch 25 or the slide switch 26, the input device 12 may include another switch.

The case 30 is attached to the outer periphery of the handlebar unit 7. The case 30 has a handlebar insertion hole 31 through which the handlebar unit 7 is inserted. A portion of the handlebar unit 7 which is located inside the case 30 extends in a direction substantially the same as a longitudinal direction G of the right grip portion 8a (the longitudinal direction is the direction of the length of the right grip portion 8a). Further, the case 30 has a box-like shape having two faces each substantially orthogonal to the longitudinal direction G of the right grip portion 8a.

The case 30 has, on its rear side with respect to the vehicle forward/rearward direction, an angular portion 32 protruding rearward in the vehicle forward/rearward direction. The angular portion 32 is located at substantially middle of the case 30 with respect to the up/down direction. Below the angular portion 32, a flat surface 33 is formed. The flat surface 33 is inclined with respect to the up/down direction so that the flat surface 33 extends downward and forward in the vehicle forward/rearward direction.

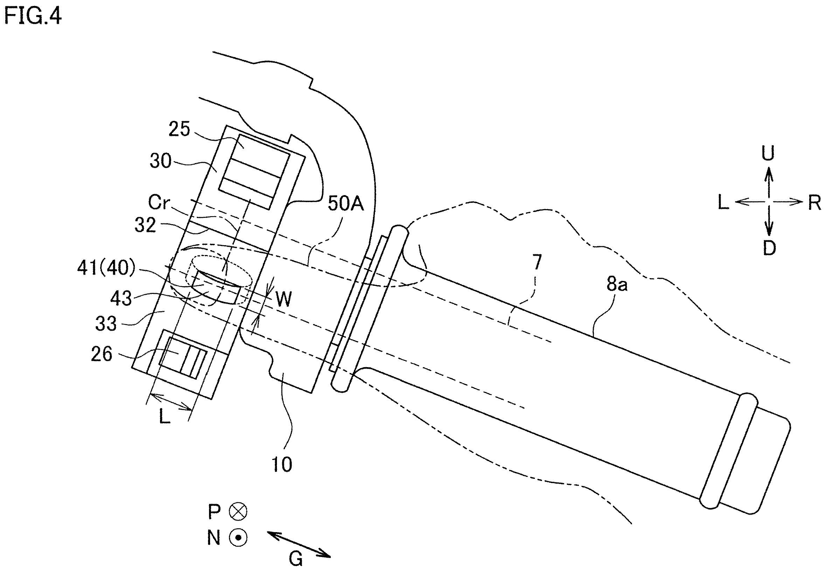

In this embodiment, the longitudinal direction G of the right grip portion 8a extends right-down-rearward from a base end to a distal end of the right grip portion 8a. Now, a thumb 50 extended in the longitudinal direction G of the right grip portion 8a while gripping the right grip portion 8a with fingers other than the thumb 50 with their third joints (the third joints from the respective tips of the fingers: MCP joints) extended is referred to as a thumb 50A. A direction from a palmar side to a nail of the thumb 50A is referred to as a direction N (a rearward direction according to the present teaching), and a direction opposite to the direction N is referred to as a direction P. The direction P and the direction N are orthogonal to a longitudinal direction of the thumb 50A (the longitudinal direction G of the right grip portion 8a) and to a width direction of the thumb 50A. Although there are some differences in the manner of gripping the grip portion 8a depending on the physical size and the riding posture of a user, the direction P and the direction N are defined herein based on an average manner of gripping. In this embodiment, the direction P and the direction N are inclined with respect to the vehicle right/left direction and to the vehicle forward/rearward direction. Note that, in FIG. 4, a symbol of an encircled middle dot represents a direction from a position farther from a viewer to a position closer to the viewer, and a symbol of an encircled x represents a direction from a position closer to the viewer to a position farther from the viewer. A thickness direction of the thumb 50A extended in the longitudinal direction G of the right grip portion 8a while gripping the right grip portion 8a is referred to as a direction PN.

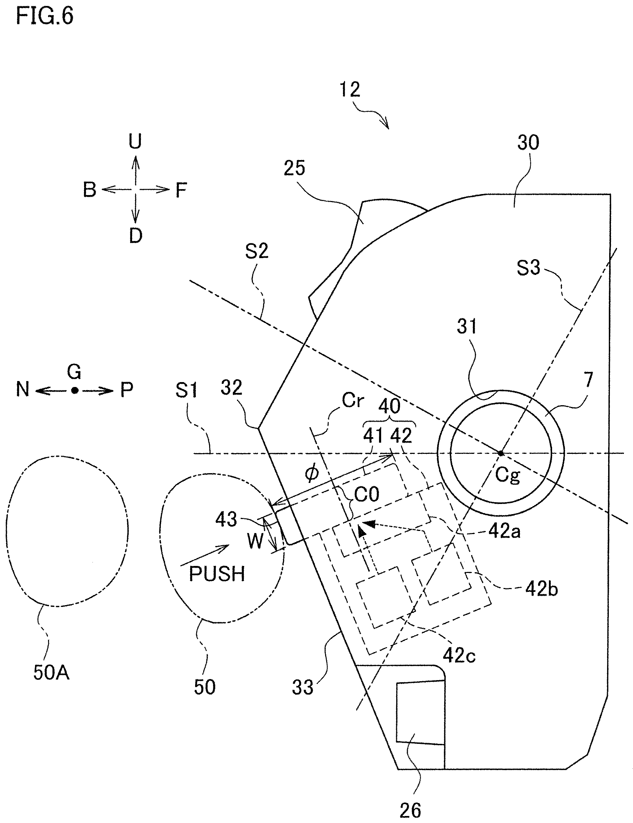

The flat surface 33 of the case 30 is formed so that the flat surface 33 extends downward and toward the direction P (see FIG. 6).

The rotary push switch 40 includes a rotating body 41 and a main body 42. The main body 42 is accommodated in the case 30, and secured to an inner surface of the case 30.

The rotating body 41 is a disc-like member made from materials such as a synthetic resin. The rotating body 41 is held by the main body 42 so as to be rotatable about an axis Cr crossing the longitudinal direction G of the right grip portion 8a (hereinafter, the axis is referred to as a rotation axis Cr). The rotation axis Cr is an axis passing through the center of the rotating body 41. Further, the rotating body 41 is held by the main body 42 so as to be movable in a predetermined direction (a direction PUSH in FIG. 6) orthogonal to the rotation axis Cr of the rotating body 41.

As shown in FIG. 4, the rotation axis Cr of the rotating body 41 crosses the longitudinal direction G of the right grip portion 8a when viewed from the direction PN. To be more specific, the rotation axis Cr of the rotating body 41 is orthogonal to the longitudinal direction G of the right grip portion 8a when viewed from the direction PN.

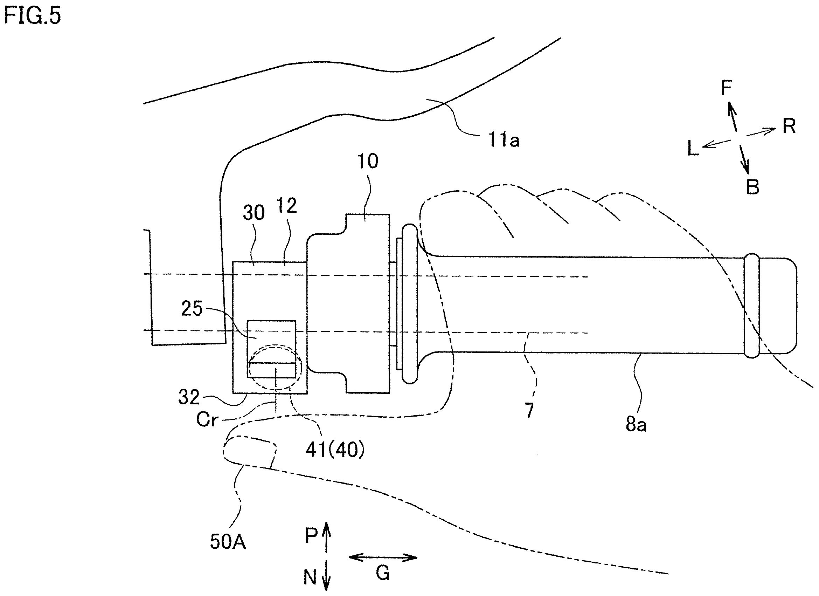

Further, as shown in FIG. 5, when viewed from a direction orthogonal to the longitudinal direction G of the right grip portion 8a and to the direction PN, the rotation axis Cr of the rotating body 41 crosses the longitudinal direction G of the right grip portion 8a. To be more specific, when viewed from the direction orthogonal to the longitudinal direction G of the right grip portion 8a and to the direction PN, the rotation axis Cr of the rotating body 41 is orthogonal to the longitudinal direction G of the right grip portion 8a.

Furthermore, as shown in FIG. 6, the rotation axis Cr of the rotating body 41 extends substantially parallel with the flat surface 33. That is, when viewed from the longitudinal direction G of the grip portion 8a, the rotation axis Cr of the rotating body 41 extends downward and toward the direction P (downward and forward in the vehicle forward/rearward direction).

As shown in FIG. 6, a portion of the rotation axis Cr of the rotating body 41 which overlaps the rotating body 41 is referred to as a central portion C0 of the rotating body 41. The central portion C0 of the rotating body 41 is positioned toward the direction N, as compared with a central axis Cg of the right grip portion 8a. In this embodiment, not only the central portion C0 of the rotating body 41, but the entire rotating body 41 is positioned toward the direction N as compared with the portion of the handlebar unit 7 which is located inside the case 30. Further, the central portion C0 of the rotating body 41 is positioned lower than a plane S1 which includes the central axis Cg of the right grip portion 8a and extends in the direction PN.

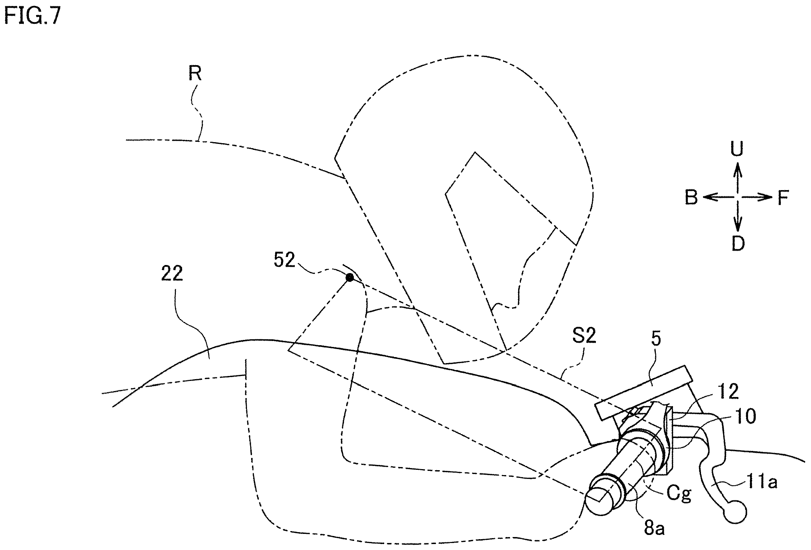

As shown in FIG. 7, a plane passing through an acromioclavicular joint 52 between a clavicle and a scapula of the rider R and including the central axis Cg of the right grip portion 8a is defined as a plane S2. Meanwhile, as shown in FIG. 6, a surface orthogonal to the plane S2 and including the central axis Cg of the right grip portion is defined as a plane S3. The central portion C0 of the rotating body 41 is positioned lower than the plane S2 and rearward of the plane S3 in the vehicle forward/rearward direction (in other words, the central portion C0 is positioned toward the direction N as compared with the plane S3). Further, in this embodiment, not only the central portion C0 of the rotating body 41, but the entire rotating body 41 is positioned lower than the plane S2 and rearward of the plane S3 in the vehicle forward/rearward direction.

With respect to a circumferential direction of the rotating body 41, a portion of an outer circumferential surface of the rotating body 41 is accommodated in the case 30, and the remaining portion is exposed to the outside of the case 30. With respect to the width direction, the outer circumferential surface of the rotating body 41 is entirely exposed to the outside of the case 30, in this embodiment. Therefore, the entire outer circumferential surface of the rotating body 41 forms an operational surface 43 operable with the thumb 50. That is, the operational surface 43 extends continuously along the entire circumference of the rotating body 41 without interruption.

The exposed portion of the rotating body 41 protrudes from a substantially quadrangular hole formed on the flat surface 33. Therefore, not only the above portion of the outer circumferential surface (operational surface 43) of the rotating body 41, but also a part of each of the both axial end surfaces of the rotating body 41 (a part of each of the both end surfaces crossing the rotation axis Cr crossing the longitudinal direction G of the right grip portion 8a) is exposed to the outside of the case 30.

Approximately one fourth of the operational surface 43, with respect to its circumferential length, is exposed to the outside of the case 30. The portion of the operational surface 43 which is exposed to the outside of the case 30 is positioned toward the direction N as compared with the central axis Cg of the right grip portion 8a. Further, the portion of the operational surface 43 which is exposed to the outside of the case 30 is positioned lower than the plane S1 including the central axis Cg of the right grip portion 8a and extending in the direction PN. Furthermore, the portion of the operational surface 43 which is exposed to the outside of the case 30 is positioned lower than the plane S2 and rearward of the plane S3 in the vehicle forward/rearward direction.

The outer diameter ø of the rotating body 41 of this embodiment (the diameter of the operational surface 43) is at a similar level to the diameter of the handlebar insertion hole 31 and to the diameter of the handlebar unit 7. A width W of the operational surface 43 (the width in the direction of the rotation axis Cr) is smaller than the radius (ø/2) of the operational surface 43. As shown in FIG. 4, the length of the portion of the operational surface 43 which is exposed to the outside of the case 30 in the direction orthogonal to the width W when viewed from the direction orthogonal to a plane which directly connects the both circumferential ends of the portion of the operational surface 43 which is exposed to the outside of the case 30 is referred to as a linear length L of the exposed portion of the operational surface 43. In this embodiment, the circumferential length of the portion of the operational surface 43 which is exposed to the outside of the case 30 is less than a half of the entire circumference of the operational surface 43, and therefore, the linear length L is equal to the distance between the both circumferential ends of the portion of the operational surface 43 which is exposed to the outside of the case 30. The width W of the operational surface 43 is smaller than the linear length L of the exposed portion of the operational surface 43.

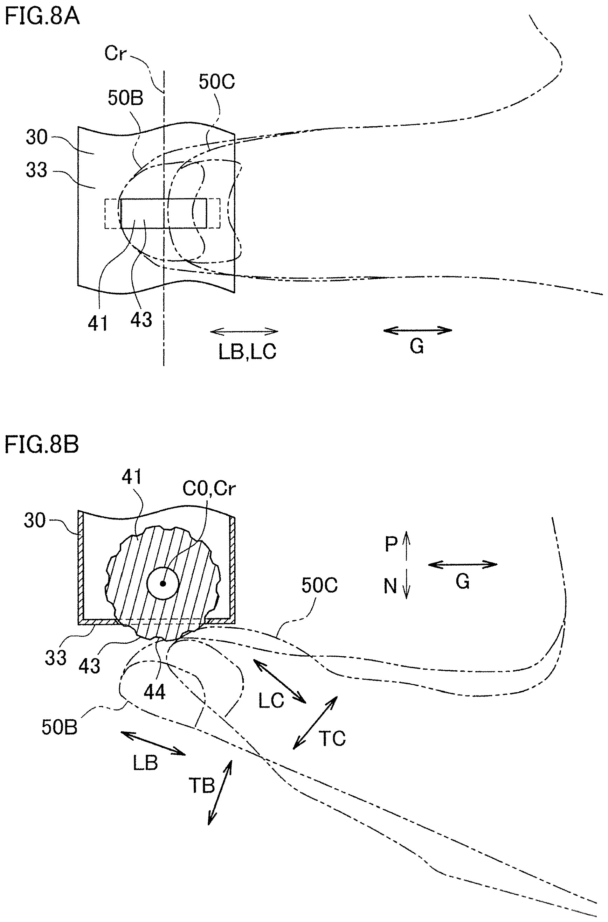

The rotating body 41 is rotationally operated by flexing and/or extending the thumb 50 while the palmar side of the thumb 50 to be in contact with the portion of the operational surface 43 which is exposed to the outside of the case 30. In this operation, the right grip portion 8a is gripped with the fingers other than the thumb 50 with the third joints (the third joints from the respective tips of the fingers: MCP joints) extended. Hereinafter, more detailed description will be given for an exemplary motion of the thumb 50 in the rotational operation of the rotating body 41, with reference to FIGs. 8A and 8B.

First, the palmar side of the thumb 50B is brought into contact with the portion of the operational surface 43 which is exposed to the outside of the case 30 so that a thumb thickness direction of the thumb 50B (a direction TB in FIG. 8B) and a nail length direction of the thumb 50B (a direction LB in FIGs. 8A and 8B) respectively extend in directions orthogonal to the rotation axis Cr of the rotating body 41. The thumb 50 is flexed in the above state to move the distal end of the thumb 50 toward the right grip portion 8a, thereby rotating the rotating body 41. The thumb 50B thus flexed is referred to as a thumb 50C. Similarly to the thumb 50B, the thumb thickness direction of the thumb 50C (a direction TC in FIG. 8B) and the nail length direction of the thumb 50C (a direction LC in FIGs. 8A and 8B) also extend in the directions orthogonal to the rotation axis Cr of the rotating body 41, respectively. Note that, the above expression that the direction TB and the direction LB (or the direction TC and the direction LC) respectively extend in the directions orthogonal to the rotation axis Cr of the rotating body 41 encompasses not only the case where each direction is completely parallel to the direction orthogonal to the rotation axis Cr, but also the case where each direction is slightly inclined with respect to the direction orthogonal to the rotation axis Cr. The thumb 50C shown in FIGs. 8A and 8B is also illustrated in FIG. 6.

Thus, the rotating body 41 of this embodiment is rotationally operated by flexing and/or extending the thumb 50 while the palmar side of the thumb 50 to be in contact with the portion of the operational surface 43 which is exposed to the outside of the case 30 so that the thumb thickness direction and the nail length direction of the thumb 50 of the hand gripping the right grip portion 8a respectively extend the directions orthogonal to the rotation axis Cr of the rotating body 41.

In FIG. 8A, a central portion of the palmar side of the thumb 50B, 50C (the central portion is a portion substantially at the center with respect to the width direction of the thumb (i.e., the direction along the rotation axis Cr)) is in contact with the operational surface 43. However, the portion of the palmar side of the thumb 50 which is in contact with the operational surface 43 is not limited to this. It is also possible to cause the palmar side of the thumb 50 to be in contact with an angular portion (an edge of the operational surface 43) of the rotating body 41 since a part of each of both axial end surfaces of the rotating body 41 is exposed to the outside of the case 30 and an outer surface of the case 30 does not have any protrusion on both sides of the rotating body 41 in the direction along the rotation axis Cr.

As described above, the rotating body 41 is operated by flexion and/or extension of the thumb 50. Therefore, the circumferential length of the portion of the operational surface 43 which is exposed to the outside of the case 30 is determined taking into account a maximum rotational angle at which the rotating body 41 is rotatable by one operation of flexion or extension of the thumb. The circumferential length of the portion of the operational surface 43 which is exposed to the outside of the case 30 may be slightly larger than the circumferential length corresponding to the maximum rotational angle at which the rotating body 41 is rotatable by one operation of flexion or extension of the thumb, for example.

The operational surface 43 is an uneven surface on which recesses 44 and projections are arranged alternately with each other in the circumferential direction (see FIG. 8B). That is, the recesses 44 and the projections are arranged in a flexion/extension direction of the thumb 50 of the hand gripping the right grip portion 8a. The groove width (the largest width) of each recess 44 in the circumferential direction of the operational surface 43 is designed so that the thumb 50 can be pressed onto an edge of the recess 44 while gripping the right grip portion 8a with fingers other than the thumb 50. This enables the thumb 50 to contact the edge of the recess 44 while being caught thereon, to rotationally operate the rotating body 41. The recess 44 may be shaped so that a bottom surface of the recess 44 can be touched with the thumb 50, or so that the bottom surface of the recess 44 cannot be touched with the thumb 50. That is, the operational surface 43 may include one or more portions which cannot be touched with the thumb 50.

Further, on the operational surface 43, there are formed a plurality of small recesses (not shown) each having a groove width smaller than that of each recess 44. These small recesses function to prevent a slip. The size of each of the small recesses is 0.1 mm to 0.3 mm, for example, but the size is not limited to this.

The rotating body 41 is operated also by pushing, specifically, by pushing the portion of the operational surface 43 which is exposed to the outside of the case 30 in the direction PUSH in FIG. 6 with the palmar side of the thumb 50 of the hand gripping the right grip portion 8a. The rotating body 41 is configured to return back to its original position when the thumb 50 pushing the rotating body 41 leaves.

As shown in FIG. 6, the main body 42 of the rotary push switch 40 includes a resistance applying unit 42a, a position detecting unit 42b, and a push detecting unit 42c. Note that the resistance applying unit 42a, the position detecting unit 42b, and the push detecting unit 42c in FIG. 6 are illustrated conceptually, and do not show their shapes.

The resistance applying unit 42a is configured to apply resistance to rotation of the rotating body 41. The resistance applying unit 42a is configured to increase/decrease the resistance applied to the rotating body 41 with respect to a rotation direction of the rotating body 41. That is, the resistance applied to the rotating body 41 is increased to the maximum each time the rotating body 41 is rotated a predetermined angle α. This gives a click feeling to the rotational operation of the rotating body 41, at intervals of the angle α. The angle α is 30 degrees, for example, but is not limited to this. The specific structure of the resistance applying unit 42a is similar to that of the resistance applying unit of a general rotary switch.

The position detecting unit 42b is configured to detect a rotational angle of the rotating body 41. Further, the position detecting unit 42b is configured to generate a rotational operation signal corresponding to the detected rotational angle and transmit the signal to the controller. The position detecting unit 42b is configured to transmit the rotational operation signal at a rotational angle at which a maximum resistance is applied to the rotating body 41 by the resistance applying unit 42a. The position detecting unit 42b may be configured to transmit the rotational operation signal at intervals of angle α, or may be configured to transmit the rotational operation signal at intervals of an angle obtained by multiplying the angle α by a predetermined number.

Further, the position detecting unit 42b may be configured to detect an angle of consecutive rotations of the rotating body 41. In this case, an input value transmitted as the rotational operation signal may be proportional to the rotational angle of the consecutive rotations, or may be non-proportional to this. In the non-proportional case, the following settings are made, for example: the input value for each angle α is set to 1 when the angle of the consecutive rotations is the same as, twice or three times as large as the angle α, and the input value for each angle α is set to 2 or a number larger than 2 when the angle of the consecutive rotations is four or more times as large as the angle α.

The push detecting unit 42c is configured to detect whether the rotating body 41 is operated by pushing. That is, the push detecting unit 42c detects whether the rotating body 41 is moved in the direction PUSH in FIG. 6. Further, the push detecting unit 42c transmits a push operation signal to the controller when the push detecting unit 42c detects that the rotating body 41 is operated by pushing. The specific structures of the position detecting unit 42b and the push detecting unit 42c are respectively similar to those of the position detecting unit and the push detecting unit of a general rotary switch.

The motorcycle 1 of this embodiment has the following features.

The input device 12 includes a case 30, and a rotating body 41 including an operational surface 43 arranged in the circumferential direction, a portion of which is accommodated in the case 30 and a remaining portion of which is exposed to the outside of the case 30. The rotating body 41 is disposed so as to be rotatable about a rotation axis Cr extending in the direction orthogonal to the thumb thickness direction (e.g., the direction TB or the direction TC) and to the nail length direction (e.g., the direction LB or the direction LC) of the thumb 50 which is of the hand gripping the grip portion 8a and is in contact with the portion of the operational surface 43 which is exposed to the outside of the case 30. Further, the rotating body 41 is rotationally operated by flexing and/or extending the thumb 50 of the hand gripping the grip portion 8a while the palmar side of the thumb 50 is in contact with the portion of the operational surface 43 which is exposed to the outside of the case 30 so that the thumb thickness direction and the nail length direction of the thumb 50 respectively extend in the directions orthogonal to the rotation axis Cr. Different rotational angles of the rotating body 41 respectively correspond to different operation amounts to be input. This allows the rotating body 41 to be used for a wider variety of input operations than a push or slide operation member, leading to its good operability.

However, since the input device 12 is provided to the handlebar unit 7, it is necessary to avoid interference between the rotating body 41 and the handlebar unit 7.

Therefore, in this embodiment, flexion and/or extension of the thumb 50 is used to operate the rotating body 41, to easily avoid interference between the rotating body 41 and the handlebar unit 7 while maintaining operability. The thumb 50 is easily moved even while the grip portion 8a is gripped with other fingers, and therefore it is suitable for operation of the rotating body 41. Further, in the flexion-extension movement, it is easy to slightly move the thumb 50 even while the grip portion 8a is gripped with the other fingers, and therefore it is easy to slightly adjust the rotational angle of the rotating body 41.

Moreover, the thumb 50 can be flexed and extended not only at the first joint (IP joint) and the second joint (MCP joint) which are closer to the tip of the thumb 50, but also at the third joint (the third joint from the tip: CMC joint) which is closer to the wrist. Accordingly, the range of movement of the distal end of the thumb 50 caused by flexion and/or extension of the thumb 50 is large. Therefore, irrespective of the diameter ø of the operational surface 43, the rotating body 41 is easily operated by flexion and/or extension of the thumb 50. This makes it possible to freely determine the diameter ø of the operational surface 43 (the outer diameter of the rotating body 41) while maintaining operability of the rotating body 41. Further, since the range of movement of the distal end of the thumb 50 caused by flexion and/or extension of the thumb 50 is large, it is possible to increase an operation amount in each operation by increasing the circumferential length of the portion of the operational surface 43 which is exposed to the outside of the case 30.

Furthermore, the thumb 50 is able to be swung around an axis extending in the direction PN while the grip portion 8a is gripped with the fingers other than the thumb 50, and therefore, flexion and/or extension of the thumb 50 is possible within this swing range.

Further, since the rotating body 41 is rotationally operated by flexion and/or extension of the thumb 50 while the grip portion 8a is gripped with the fingers other than the thumb 50, the rotation axis Cr of the rotating body 41 extends in a direction crossing the longitudinal direction of the grip portion 8a when viewing the input device 12 from the direction PN.

Due to the fact that the rotation axis Cr of the rotating body 41 extends in the direction crossing the longitudinal direction of the grip portion 8a when viewing the input device 12 from the direction PN, and that there is freedom in determining the diameter ø of the rotating body 41, interference between the rotating body 41 and the handlebar unit 7 is easily avoided. Moreover, since flexion and/or extension of the thumb 50 is/are possible within the swing range, operability of the rotating body 41 is maintained while avoiding interference between the rotating body 41 and the handlebar unit 7.

Further, in this embodiment, while the grip portion 8a is gripped with the fingers other than the thumb 50, it is possible to bring the palmar side of the thumb 50 into contact with the portion of the operational surface 43 which is exposed to the outside of the case 30 so that the thumb thickness direction (e.g., the direction TB or the direction TC) of the thumb 50 and the nail length direction (e.g., the direction LB or the direction LC) of the thumb 50 respectively extends in the directions orthogonal to the rotation axis Cr of the rotating body 41. This facilitates rotational operation of the rotating body 41 by flexion and/or extension of the thumb 50.

When the rotating body 41 is successively rotated in one direction by repeating flexion-extension movement of the thumb 50 multiple times, the rotating body 41 is rotated by flexion or extension, and then the thumb 50 is extended or flexed while being raised to be separated from the operational surface 43, thereby to return the thumb 50 back to its original position on the operational surface 43. Therefore, the thumb 50 possibly contacts the rotating body 41 on the way to returning the thumb 50 back to its original position by raising the thumb 50. Such an incident is more likely to occur if gloved. However, in this embodiment, the resistance applying unit 42a applies resistance to the rotation of the rotating body 41, and this prevents the rotating body 41 from being rotated merely by light touch of the thumb 50 onto the rotating body 41. This improves operability of the rotating body 41.

Further, in this embodiment, the resistance applying unit 42a is configured to increase/decrease the resistance applied to the rotating body 41 with respect to the rotation direction of the rotating body 41 so that a click feeling is given to the rotational operation of the rotating body 41 at intervals of the predetermined angle α. The click feeling given to the rotational operation of the rotating body 41 at intervals of the predetermined angle α enables the rider to realize that the rotating body 41 has been rotated the angle α. This facilitates input operations in which a selected item is changed each time the rotating body 41 is rotated the predetermined angle α, for example.

The circumferential length of the portion of the operational surface 43 which is exposed to the outside of the case 30 is determined based on the maximum rotational angle of the rotating body 41 at which the rotating body 41 is rotatable by one operation of flexion or extension of the thumb 50. From the diameter ø of the operational surface 43 and the thus determined circumferential length of the portion of the operational surface 43 which is exposed to the outside of the case 30, the linear length L of the exposed portion of the operational surface 43 is derived. The linear length L of the exposed portion of the operational surface 43 is smaller than the circumferential length of the portion of the operational surface 43 which is exposed to the outside of the case 30. In this embodiment, the width W of the operational surface 43 is smaller than the linear length L of the exposed portion of the operational surface 43. The smaller width W of the operational surface 43 allows a contact area between the thumb 50 and the operational surface 43 to be smaller. This results in a larger pressure per unit area on the contact area between the thumb 50 and the operational surface. This helps the rider to realize which portion of the thumb 50 contacts the operational surface 43, thereby further improving usability

Further, the smaller width of the operational surface 43 allows the rotating body 41 to be installed in a smaller space. This helps the rotating body 41 not interfere with the handlebar unit 7.

Further, in this embodiment, the entire outer circumferential surface of the rotating body 41 forms the operational surface 43, and a part of each of the both end surfaces of the rotating body 41 which cross the rotation axis Cr is exposed to the outside of the case 30. This makes it possible to rotate the rotating body 41 while the thumb 50 is in contact with an edge of one of the both end surfaces of the rotating body 41 (an edge of the operational surface 43). In this case, the pressure per unit area on the contact area between the thumb 50 and the operational surface 43 is larger than the case where the rotating body 41 is rotated with the thumb 50 surface-contacting the operational surface 43. This helps the rider to realize which portion of the thumb 50 contacts the operational surface 43, thereby improving usability.

Furthermore, in this embodiment, the operational surface 43 is an uneven surface on which the recesses 44 and the projections are arranged alternately with each other in the flexion/extension direction of the thumb 50 of the hand gripping the grip portion 8a, and a groove width of each recess 44 in the flexion/extension direction is designed to enable an edge of a recess 44 to be pushed with the thumb 50 of the hand gripping the grip portion 8a. Therefore, it is possible to rotate the rotating body 41 by flexing and/or extending the thumb 50 while pushing the edge of the recess 44 (or a surface defining the recess 44) with the thumb 50. The thumb 50 is thus caught on the recess 44, and this prevents the thumb 50 from slipping in the circumferential direction. Therefore, operability of the rotating body 41 is improved.

Further, in this embodiment, the plurality of small recesses each having the smaller groove width than that of each recess 44 are formed on the operational surface 43 of the rotating body 41. Therefore, when the rotating body 41 is rotated by flexing and/or extending the thumb 50 while the thumb 50 is in contact with the operational surface 43, the small recesses prevent a slip of the thumb 50 (the slip is not limited to a slip in the circumferential direction of the operational surface 43). This further improves operability of the rotating body 41.

Further, in this embodiment, the rotating body 41 is configured to be operable by pushing the rotating body 41 with the thumb 50 of the hand gripping the grip portion 8a in a predetermined direction orthogonal to the rotation axis Cr of the rotating body 41 (in the PUSH direction in FIG. 6). Thus, the rotating body 41 is operable not only through a rotational operation by flexion and/or extension of the thumb 50, but also by the pushing operation, and therefore three or more types of input operations are possible using the single rotating body 41.

A preferred embodiment has been described above. However, the present teaching is not limited to the above-described embodiment, and various changes can be made within the scope of the claims. Further, variations which will be described later may be used in combination as needed. Note that the term "preferable" in this specification is non-exclusive, and means "preferable, but not limited to".

In the above embodiment, the operational surface 43 is formed into the uneven surface where the recesses 44 and the projections are arranged alternately with each other; however, the shape of the operational surface 43 is not limited to this. For example, the operational surface may be formed so that its diameter is constant with respect to the circumferential direction.

In the above embodiment, the plurality of small recesses (not shown) each having the smaller groove width than that of each recess 44 are formed on the operational surface 43; however, the small recesses do not have to be formed. Further, the outer circumferential surface of the rotating body 41 may be covered with skin made of materials having a high friction coefficient, such as rubber, to serve a non-slip function on the operational surface 43. Alternatively, the non-slip function may be provided on the operational surface 43 in any other way.

The outer diameter ø of the rotating body 41 (the diameter of the operational surface 43), the width W of the rotating body 41 (the width of the operational surface 43), and the linear length L of the exposed portion of the operational surface 43 are not limited to those in the above embodiment, respectively. Provided however, it is preferable that the width W of the operational surface 43 of the rotating body 41 is smaller than the linear length L of the exposed portion of the operational surface 43. Further, in the above embodiment, the width W of the operational surface 43 is smaller than the radius of the operational surface 43 (ø/2); however, the width W may be larger than the radius (ø/2). Provided however, it is preferable that the width W of the operational surface 43 is smaller than the diameter ø of the operational surface 43.

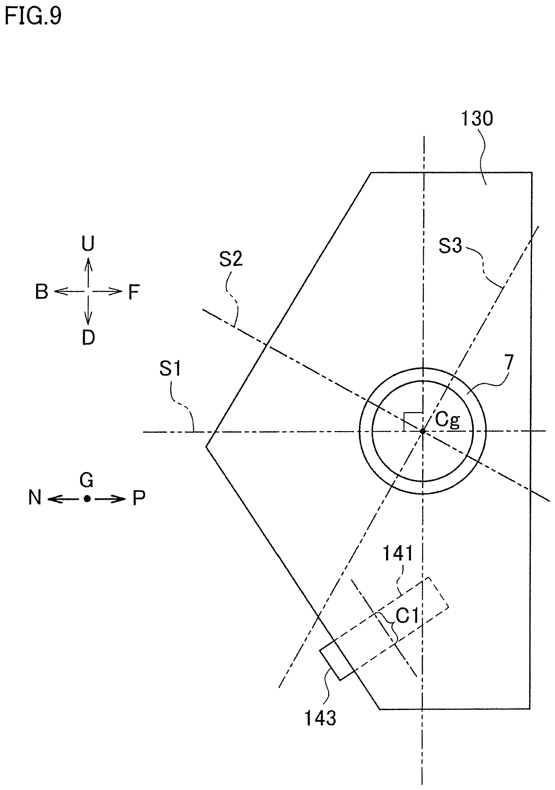

In the above embodiment, the entire rotating body 41 is positioned toward the direction N as compared with the portion of the handlebar unit 7 which is located inside the case 30; however, the entire rotating body 41 does not have to be positioned toward the direction N as compared with the portion of the handlebar unit 7 which is located inside the case 30. For example, the structure shown in FIG. 9 is possible in which a part of a rotating body 141 is at the same position as the handlebar unit 7 with respect to the direction PN, as long as a central portion C1 of the rotating body 141 is positioned toward the direction N as compared with the central axis Cg of the grip portion 8a.

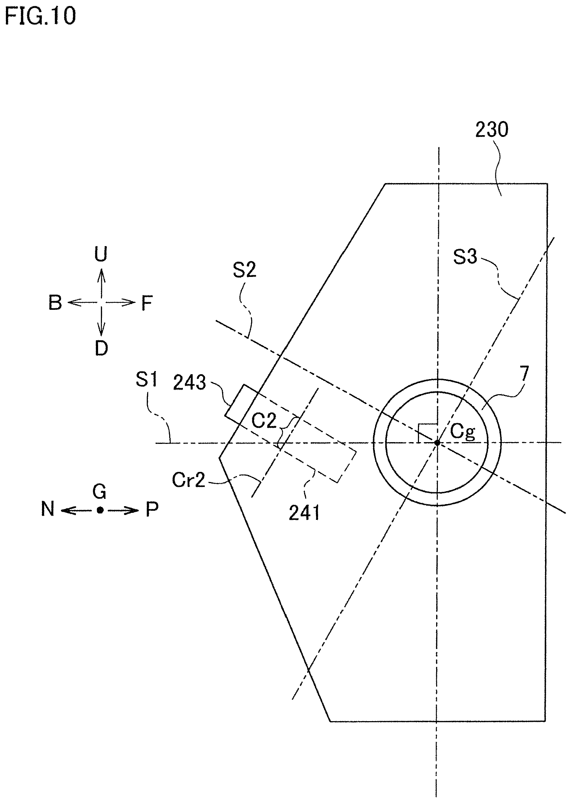

Further, in the above embodiment, the entire rotating body 41 is positioned lower than the plane S1. However, as shown in FIG. 10, for example, at least a part of a rotating body 241 may be positioned higher than the plane S1. In this case, as shown in FIG. 10, at least a part of a central portion C2 of the rotating body 241 may be positioned higher than the plane S1. In addition, as shown in FIG. 10, at least a part of the portion of an operational surface 243 which is exposed to the outside of the case 30 may be positioned higher than the plane S1.

In the above embodiment, the entire rotating body 41 is positioned lower than the plane S2; however, at least a part of the rotating body 41 may be positioned higher than the plane S2. In this case, at least a part of the central portion C0 of the rotating body 41 may be positioned higher than the plane S2. Further, at least a part of the portion of the operational surface 43 which is exposed to the outside of the case 30 may be positioned higher than the plane S2.

In the above embodiment, the entire rotating body 41 is positioned rearward of the plane S3 in the vehicle forward/rearward direction (in other words, positioned toward the direction N as compared with the plane S3). However, as shown in FIG. 9, for example, at least a part of the rotating body 141 may be positioned forward of the plane S3 in the vehicle forward/rearward direction. In this case, as shown in FIG. 9, at least a part of the central portion C1 of the rotating body 141 may be positioned forward of the plane S3 in the vehicle forward/rearward direction. Further, as shown in FIG. 9, at least a part of the portion of the operational surface 143 which is exposed to the outside of the case 130 may be positioned forward of the plane S3 in the vehicle forward/rearward direction.

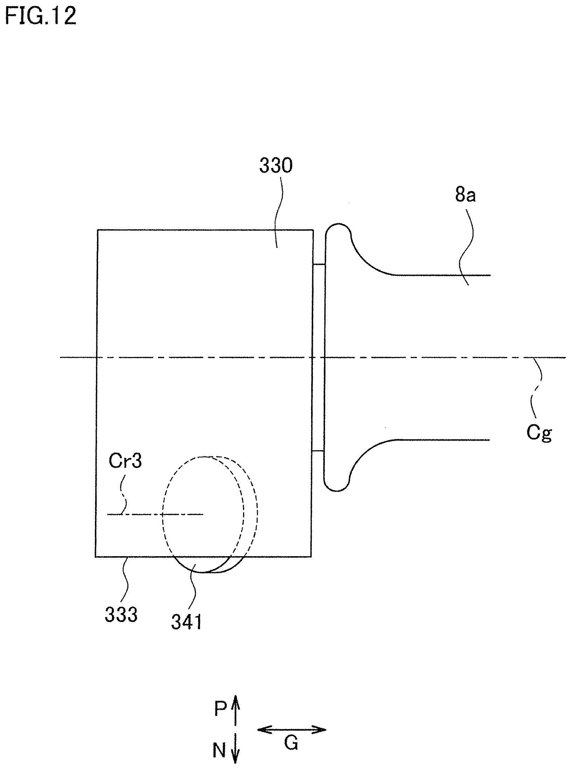

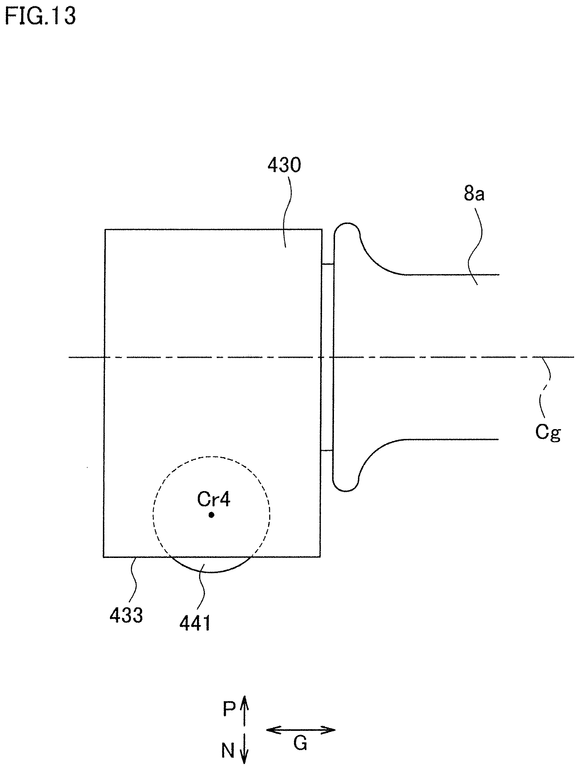

The surface of the case 30 having the hole for the exposed portion of the rotating body 41 is not limited to the flat surface 33 of the above embodiment which is inclined as described above. For example, as is in the case 230 shown in FIG. 10, a surface inclined so that the surface extends upward and toward the direction P may have the hole for the exposed portion of the rotating body 241. Further, for example, as shown in each of FIGs. 12 and 13, when viewed from the direction orthogonal to the direction PN and to the longitudinal direction G of the grip portion 8a, the exposed portion of the rotating body 341, 441 may protrudes from a surface 333, 433 of a case 330, 430 which is parallel to the grip portion 8a.

In the above embodiment, approximately one fourth of the operational surface 43 with respect to its circumferential length is exposed to the outside of the case 30; however, the length of the exposed portion of the operational surface 43 is not limited to this. For example, a half or more of the operational surface with respect to its circumferential length may be exposed to the outside of the case.

In the above embodiment, the rotation axis Cr of the rotating body 41 is orthogonal to the longitudinal direction G of the grip portion 8a when viewed from the direction PN; however, the direction in which the rotation axis Cr of the rotating body 41 extends when viewed from the direction PN is not limited to this. When viewed from the direction PN, the rotation axis Cr of the rotating body 41 does not have to be orthogonal to the longitudinal direction G of the grip portion 8a, as long as the rotation axis Cr crosses the longitudinal direction G of the grip portion 8a. It is preferable that the direction in which the rotation axis Cr of the rotating body 41 extends when viewed from the direction PN is determined taking into account the flexion/extension direction of the thumb 50.

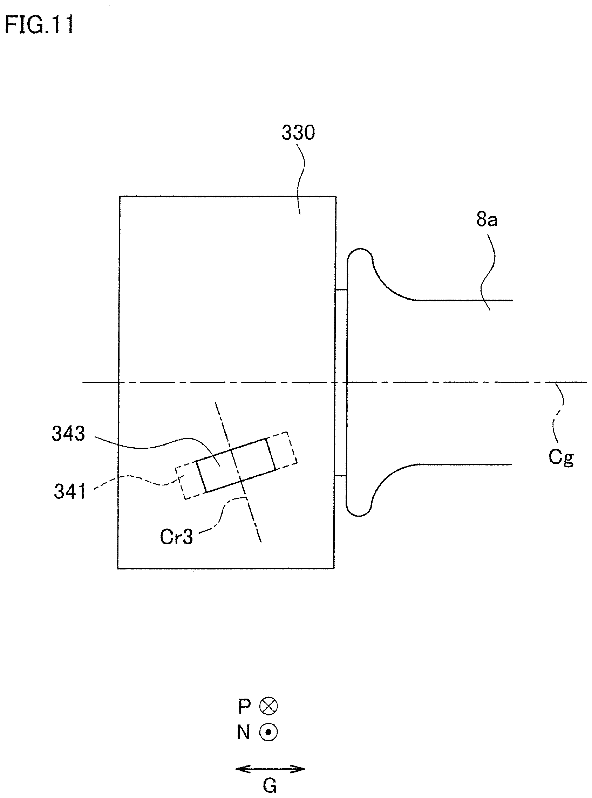

For example, as shown in FIG. 11, in the case where the portion of the operational surface 343 which is exposed to the outside of the case 330 is positioned lower than the central axis Cg of the grip portion 8a when viewed from the direction PN, a rotation axis Cr3 of the rotating body 341 may extend downward and toward the grip portion 8a when viewed from the direction PN. Note that FIG. 11 is a view of the input device shown in FIG. 12, viewed from the direction P. Alternatively, for example, in the case where the exposed portion of the operational surface is located higher than the central axis Cg of the grip portion 8a when viewed from the direction PN, the rotation axis of the rotating body may extend upward and toward the grip portion 8a when viewed from the direction PN.

In the above embodiment, the rotation axis Cr of the rotating body 41 is orthogonal to the longitudinal direction G of the grip portion 8a when viewed from the direction orthogonal to the longitudinal direction G of the grip portion 8a and to the direction PN. However, the direction in which the rotation axis Cr of the rotating body 41 extends when viewed from the direction orthogonal to the longitudinal direction G of the grip portion 8a and to the direction PN is not limited to this. As shown in FIG. 12, for example, when viewed from the direction orthogonal to the longitudinal direction G of the grip portion 8a and to the direction PN, the rotation axis Cr3 of the rotating body 341 may be parallel with the longitudinal direction G of the grip portion 8a. Alternatively, as shown in FIG. 13, for example, a rotation axis Cr4 of the rotating body 441 may extend in the direction orthogonal to the longitudinal direction G of the grip portion 8a and to the direction PN.

In the above-described embodiment, when viewed from the longitudinal direction G of the grip portion 8a, the rotation axis Cr of the rotating body 41 extends downward and toward the direction P (downward and forward in the vehicle forward/rearward direction); however, the direction in which the rotation axis Cr of the rotating body 41 extends when viewed from the longitudinal direction G of the grip portion 8a is not limited to this. As shown in FIG. 10, for example, when viewed from the longitudinal direction G of the grip portion 8a, a rotation axis Cr2 of the rotating body 241 may extend downward and toward the direction N (downward and rearward in the vehicle forward/rearward direction).

Note that each of the above-described rotating bodies 141, 241, 341 and 441 illustrated in FIGs. 9 to 13 is a disc-like member similarly to the rotating body 41 of the above-described embodiment, and the rotation axis of each rotating body passes through the center of the rotating body.

The position and the direction of each of the right and left grip portions 8a and 8b are not limited to those in the above embodiment. In the above embodiment, the thickness direction of the thumb 50A extended in the longitudinal direction G of the grip portion 8a while gripping the grip portion 8a (i.e., the direction PN) is inclined with respect to the vehicle forward/rearward direction; however, the direction PN may be parallel to the vehicle forward/rearward direction.

In the above embodiment, the case 30 is formed so that the both end surfaces of the rotating body 41 in its axial direction are exposed to the outside of the case 30; however, the case 30 may be formed so that one of the axial end surfaces of the rotating body 41 is exposed to the outside of the case 30 and the other end surface is not exposed to the outside of the case 30. Alternatively, the case 30 may be formed so that the both axial end surfaces of the rotating body 41 are not exposed to the outside of the case 30.

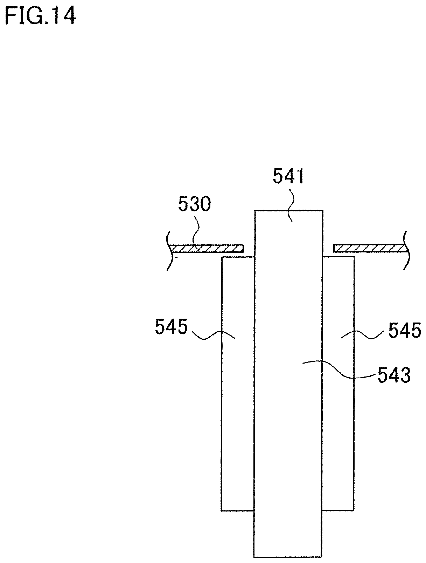

In the above embodiment, the entire outer circumferential surface of the rotating body 41 forms the operational surface 43 operable with the thumb 50; however, the present teaching is not limited to this structure. For example, the following structure is possible: as shown in FIG. 14, a part of an outer circumferential surface of a rotating body 541 in its axial direction forms an operational surface 543, and the remaining part forms a non-operational surface 545 which is always accommodated in a case 530. The diameter of the operational surface 543 is larger than the diameter of the non-operational surface 545. Further, in FIG. 14, the both axial end portions of the rotating body 541 form the non-operational surface 545; however, the non-operational surface may be formed by either one of the axial end portions of the rotating body.

In the above embodiment, the resistance applying unit 42a of the input device 12 is configured to increase/decrease resistance applied to the rotating body 41 with respect to the rotation direction of the rotating body 41; however, the resistance applying unit may be configured to apply constant resistance to the rotating body 41 irrespective of the rotational angle.

In the above embodiment, the rotary push switch 40 is configured to be operable through both of the rotational operation and the pushing operation; however, the switch may be configured to be operable only through the rotational operation. Further, the rotary push switch 40 of this embodiment is configured to be rotatable in the normal and reverse directions; however, the switch may be configured to rotatable in one of these directions.

In the above embodiment, the single rotary push switch 40 is included in the input device 12; however, the input device 12 may include two or more rotary push switches 40.

The above embodiment deals with, as an example, the case where the input device of the present teaching is applied to the input device 12 provided to the right portion of the handlebar unit 7; however, the input device of the present teaching may be applied to the input device 13 provided to the left portion of the handlebar unit 7.

In the above embodiment, the handlebar unit 7 has a section of a hollow circle; however, the shape of the section of the handlebar unit of the present teaching is not limited to the circular shape. For example, the handlebar unit may have a section of a hollow quadrangle.

In the above embodiment, the handlebar unit 7 has clip-on handlebars; however, the handlebar unit of the present teaching may have a one-piece handlebar. The clip-on handlebars are handlebars coupled to front forks without a handle crown interposed therebetween. The one-piece handlebar is a handlebar directly coupled to a handle crown.

The motorcycle 1 of the above embodiment is a street motorbike and a motorbike in a narrow sense; however, the saddle type vehicle of the present teaching is not limited to the motorbike in the narrow sense. It should be noted that the term "saddle type vehicle" refers to overall vehicles which a rider rides astride a saddle. The saddle type vehicle of the present teaching encompasses: two-wheeled motor vehicles (motorbikes in a broad sense), three-wheeled vehicles, four-wheelers (all terrain vehicles (ATV)), water scooters, snowmobiles, and the like. Further, the motorbikes in the broad sense include scooters and the like, in addition to the motorbikes in the narrow sense.

## Claims

1. A saddle type vehicle (1) comprising:
a handlebar unit (7) provided forward of a seat (23) in a vehicle forward/rearward direction, the seat (23) held by a vehicle body frame (4);
a left grip portion (8b) and a right grip portion (8a) respectively provided on a left end portion and a right end portion of the handlebar unit (7); and
an input device (12) provided to the handlebar unit (7), the input device (12) configured to be operable with a palmar side of a thumb of a hand gripping one of the left grip portion (8b) and the right grip portion (8a);
the input device (12) comprises:
a case (30) ; and
a rotating body (41) which is a disc-like member including an operational surface (43) arranged in a circumferential direction, the operational surface (43) extends continuously along the entire circumference of the rotating body (41) without interruption, and includes a portion which is accommodated in the case (30) wherein a remaining portion of the operational surface (43) is exposed to an outside of the case (30), wherein the entire operational surface (43) forms the surface operable by the thumb,
the rotating body (41) being disposed so as to be rotatable about an axis (Cr) which passes through the center of the rotating body (41), crosses the longitudinal direction (G) of the corresponding one of the grip portions (8a, 8b) and extends, in use, in a direction orthogonal to (i) a thumb thickness direction (TB, TC) and (ii) a nail length direction of the thumb (LB, LC) which is of the hand gripping the corresponding one of the grip portions (8a, 8b) and is in contact with the portion of the operational surface (43) which is exposed to the outside of the case (30),
the rotating body (41) is configured to be rotationally operated by flexing and/or extending the thumb of the hand gripping the corresponding one of the grip portions (8a, 8b) while the palmar side of the thumb is in contact with the portion of the operational surface (43) which is exposed to the outside of the case (30) so that the thumb thickness direction (TB, TC) and the nail length direction of the thumb (LB, LC) respectively extend in directions orthogonal to the axis (Cr).

2. The saddle type vehicle (1) according to claim 1, wherein the input device (12) includes a resistance applying unit (42a) configured to apply resistance to the rotation of the rotating body (41).

3. The saddle type vehicle (1) according to claim 2, wherein the resistance applying unit (42a) is configured to increase/decrease the resistance applied to the rotating body (41) with respect to a rotation direction of the rotating body (41) so that a click feeling is given to a rotational operation of the rotating body (41) at intervals of a predetermined angle.

4. The saddle type vehicle (1) according to any one of claims 1 to 3, wherein in the rotating body (41), a width (W) of the operational surface (43) in a direction of the axis (Cr) crossing the longitudinal direction (G) of the corresponding one of the grip portions (8a, 8b) is smaller than a length (L) of the portion of the operational surface (43) which is exposed to the outside of the case (30) in a direction orthogonal to the width (W) when viewed from a direction orthogonal to a plane directly connecting both circumferential ends of the portion of the operational surface (43) which is exposed to the outside of the case (30).

5. The saddle type vehicle (1) according to any one of claims 1 to 4, wherein:
an entire outer circumferential surface of the rotating body (41) forms the operational surface (43); and
at least a part of each of both end surfaces of the rotating body (41) which cross the axis (Cr) crossing the longitudinal direction (G) of the corresponding one of the grip portions (8a, 8b) is exposed to the outside of the case (30).

6. The saddle type vehicle (1) according to any one of claims 1 to 5, wherein:
the operational surface (43) of the rotating body (41) is an uneven surface on which, in use, recesses (44) and projections are arranged alternately with each other in a flexion/extension direction of the thumb of the hand gripping the corresponding one of the grip portions (8a, 8b); and
a groove width of each recess (44) in the flexion/extension direction is designed to enable an edge of the recess (44) to be pushed with the thumb of the hand gripping the corresponding one of the grip portions (8a, 8b).

7. The saddle type vehicle (1) according to claim 6, wherein a plurality of small recesses each having a groove width smaller than that of each of the recesses (44) are formed on the operational surface (43) of the rotating body (41).

8. The saddle type vehicle according to any one of claims 1 to 7, wherein the rotating body (41) is configured to be operable by pushing the rotating body (41) with the thumb of the hand gripping the corresponding one of the grip portions (8a, 8b) in a predetermined direction orthogonal to the axis (Cr) crossing the longitudinal direction (G) of the corresponding one of the grip portions (8a, 8b).

9. The saddle type vehicle (1) according to any one of claims 1 to 8, wherein:
the portion of the operational surface (43) which is exposed to the outside of the case (30) is positioned rearward of a central axis of the corresponding one of the grip portions (8a, 8b), on an assumption that a direction from a nail to the palmar side of the thumb which is of the hand gripping the corresponding one of the grip portions (8a, 8b) and is extended in the longitudinal direction of the corresponding one of the grip portions (8a, 8b) is a forward direction and that a direction opposite to the forward direction is a rearward direction; and
the rotating body (41) is rotatable about the axis (Cr) crossing the longitudinal direction (G) of the corresponding one of the grip portions (8a, 8b) when viewing the input device (12) in the forward direction.

## Patentansprüche

1. Spreizsitz-Fahrzeug (1), das umfasst:
eine Lenker-Einheit (7), die sich in einer Fahrzeug-Längsrichtung vor einem Sitz (23) befindet, wobei der Sitz (23) von einem Fahrzeugkarosserie-Rahmen (4) gehalten wird;
einen linken Griff-Abschnitt (8b) und einen rechten Griff-Abschnitt (8a), die sich an einem linken Endabschnitt bzw. einem rechten Endabschnitt der Lenker-Einheit (7) befinden; sowie
eine Eingabevorrichtung (12), die sich an der Lenker-Einheit (7) befindet, wobei die Eingabevorrichtung (12) mit einer Handflächen-Seite eines Daumens einer Hand betätigt werden kann, die den linken Griff-Abschnitt (8b) oder den rechten Griff-Abschnitt (8a) umgreift;
wobei die Eingabevorrichtung (12) umfasst:
eine Verkleidung (30); und
einen Drehkörper (41), der ein scheibenförmiges Element ist, das eine Betätigungsfläche (43) enthält, die in einer Umfangsrichtung angeordnet ist, wobei sich die Betätigungsfläche (43) ohne Unterbrechung durchgehend über den gesamten Umfang des Drehkörpers (41) erstreckt, und der einen Abschnitt aufweist, der in der Verkleidung (30) aufgenommen ist, wobei ein verbleibender Abschnitt der Betätigungsfläche (43) von der Verkleidung (30) nach außen freiliegt und die gesamte Betätigungsfläche (43) die Fläche bildet, die mit dem Daumen betätigt werden kann,
der Drehkörper (41) so angeordnet ist, dass er um eine Achse (Cr) herum gedreht werden kann, die durch die Mitte des Drehkörpers (41) hindurch verläuft, die Längsrichtung (G) des entsprechenden der Griff-Abschnitte (8a, 8b) schneidet und sich in Funktion in einer Richtung im rechten Winkel zu a) einer Daumen-Dickenrichtung (TB, TC) und b) einer Nagel-Längsrichtung des Daumens (LB, LC) erstreckt, der zu der Hand gehört, die den entsprechenden der Griff-Abschnitte (8a, 8b) umgreift und in Kontakt mit dem Abschnitt der Betätigungsfläche (43) ist, die von der Verkleidung (30) nach außen freiliegt,
wobei der Drehkörper (41) so ausgeführt ist, dass er drehend betätigt wird, indem der Daumen der Hand, die den entsprechenden der Griff-Abschnitte (8a, 8b) umgreift, gekrümmt und/oder ausgestreckt wird, während die Handflächen-Seite des Daumens so in Kontakt mit dem Abschnitt der Betätigungsfläche (43) ist, der von der Verkleidung (30) nach außen freiliegt, dass sich die Daumen-Dickenrichtung (TB, TC) und die Nagel-Längsrichtung (LB, LC) des Daumens jeweils in Richtungen im rechten Winkel zu der Achse (Cr) erstrecken.

2. Spreizsitz-Fahrzeug (1) nach Anspruch 1, wobei die Eingabevorrichtung (12) eine Einheit (42a) zum Ausüben von Widerstand enthält, die so ausgeführt ist, dass sie der Drehung des Drehkörpers (41) Widerstand entgegensetzt.

3. Spreizsitz-Fahrzeug (1) nach Anspruch 2, wobei die Einheit (42a) zum Ausüben von Widerstand so ausgeführt ist, dass sie den auf den Drehkörper (41) in Bezug auf eine Drehrichtung des Drehkörpers (41) ausgeübten Widerstand verstärkt/abschwächt, so dass bei einer Drehbetätigung des Drehkörpers (41) in Intervallen eines vorgegebenen Winkels ein Einrast-Gefühl vermittelt wird.

4. Spreizsitz-Fahrzeug (1) nach einem der Ansprüche 1 bis 3, wobei bei dem Drehkörper (41) eine Breite (W) der Betätigungsfläche (43) in einer Richtung der Achse (Cr), die die Längsrichtung (G) des entsprechenden der Greif-Abschnitte (8a, 8b) schneidet, kleiner ist als eine Länge (L) des Abschnitts der Betätigungsfläche (43), der von der Verkleidung (30) nach außen freiliegt, in einer Richtung im rechten Winkel zu der Breite (W), gesehen in einer Richtung im rechten Winkel zu einer Ebene, die beide Umfangsenden des Abschnitts der Betätigungsfläche (43), der von der Verkleidung (30) nach außen freiliegt, direkt verbindet.

5. Spreizsitz-Fahrzeug (1) nach einem der Ansprüche 1 bis 4, wobei:
eine gesamte Außenumfangsfläche des Drehkörpers (41) die Betätigungsfläche (43) bildet; und
wenigstens ein Teil jeder der beiden Endflächen des Drehkörpers (41), die die Achse (Cr) schneiden, die die Längsrichtung (G) des entsprechenden der Griff-Abschnitte (8a, 8b) schneidet, von der Verkleidung (30) nach außen freiliegt.

6. Spreizsitz-Fahrzeug (1) nach einem der Ansprüche 1 bis 5, wobei:
die Betätigungsfläche (43) des Drehkörpers (41) eine unebene Fläche ist, an der in Funktion Vertiefungen (44) und Vorsprünge abwechselnd miteinander in einer Krümmungs/Ausstreck-Richtung des Daumens der Hand angeordnet sind, die den entsprechenden der Greif-Abschnitte (8a, 8b) umgreift;
und
eine Einkerbungsbreite jeder Vertiefung (44) in der Krümmungs/Ausstreck-Richtung so eingerichtet ist, dass es möglich ist, eine Kante der Vertiefung (44) mit dem Daumen der Hand zu schieben, die den entsprechenden der Greif-Abschnitte (8a, 8b) umgreift.

7. Spreizsitz-Fahrzeug (1) nach Anspruch 6, wobei eine Vielzahl kleiner Vertiefungen, die jeweils eine Einkerbungsbreite haben, die kleiner ist als die jeder der Vertiefungen (44), an der Betätigungsfläche (43) des Drehkörpers (41) ausgebildet ist.

8. Spreizsitz-Fahrzeug nach einem der Ansprüche 1 bis 7, wobei der Drehkörper (41) so ausgeführt ist, dass er betätigt werden kann, indem der Drehkörper (41) mit dem Daumen der Hand, die den entsprechenden der Greif-Abschnitte (8a, 8b) umgreift, in einer vorgegebenen Richtung im rechten Winkel zu der Achse (Cr) geschoben wird, die die Längsrichtung (G) des entsprechenden der Greif-Abschnitte (8a, 8b) schneidet.

9. Spreizsitz-Fahrzeug (1) nach einem der Ansprüche 1 bis 8, wobei:
der Abschnitt der Betätigungsfläche (43), der von der Verkleidung (30) nach außen freiliegt, hinter einer Mittelachse des entsprechenden der Greif-Abschnitte (8a, 8b) positioniert ist, wenn angenommen wird, dass eine Richtung von einem Nagel zu einer Handflächen-Seite des Daumens, der zu der Hand gehört, die den entsprechenden der Greif-Abschnitte (8a, 8b) umgreift, und der in der Längsrichtung des entsprechenden der Greif-Abschnitte (8a, 8b) ausgestreckt ist, eine Vorwärtsrichtung ist, und eine der Vorwärtsrichtung entgegengesetzte Richtung eine Rückwärtsrichtung ist; und
der Drehkörper (41) um die Achse (Cr) herum gedreht werden kann, die, bei Sicht auf die Eingabevorrichtung (12) in der Vorwärtsrichtung, die Längsrichtung (G) des entsprechenden der Greif-Abschnitte (8a, 8b) schneidet.

## Revendications

1. Véhicule de type à selle (1) comprenant :
un guidon (7) prévu en avant d'un siège (23) dans la direction avant arrière du véhicule, le siège (23) étant maintenu par le cadre (4) du véhicule,
un organe de préhension gauche (8b) et un organe de préhension droit (8a) prévus respectivement sur la partie terminale gauche et sur la partie terminale droite du guidon (7), et
un dispositif d'entrée (12) prévu sur le guidon (7), le dispositif d'entrée (12) étant configuré pour être manoeuvré avec le côté palmaire d'un pouce de main saisissant l'un de l'organe de préhension gauche (8b) et de l'organe de préhension droit (8a),
le dispositif d'entrée (12) comprend :
un boîtier (30), et
un corps tournant (41) qui est un élément de type disque incluant une surface fonctionnelle (43) agencée dans la direction circonférentielle, la surface fonctionnelle (43) s'étendant de manière continue le long de la circonférence du corps tournant (41) sans interruption et incluant une partie qui est logée dans le boîtier (30), une partie restante de la surface fonctionnelle (43) étant exposée vers l'extérieur du boîtier (30), toute la surface fonctionnelle (43) formant la surface pouvant être manoeuvrée par le pouce,
le corps tournant (41) est disposé de façon à pouvoir tourner autour d'un axe (Cr) qui traverse le centre du corps tournant (41), croise la direction longitudinale (G) de l'organe correspondant des organes de préhension (8a, 8b) et se déploie, en service, dans la direction orthogonale à (i) la direction de l'épaisseur du pouce (TB, TC) et (ii) la direction de la longueur de l'ongle du pouce (LB, LC) qui fait partie de la main saisissant l'organe correspondant des organes de préhension (8a, 8b) et qui est en contact avec la partie de la surface fonctionnelle (43) exposée vers l'extérieur du boîtier (30),
le corps tournant (41) est configuré pour pouvoir être manoeuvré en rotation en fléchissant et en détendant le pouce de la main saisissant l'organe correspondant des organes de préhension (8a, 8b) alors que le côté palmaire du pouce est en contact avec la partie de la surface fonctionnelle (43) qui est exposée vers l'extérieur du boîtier (30) de sorte à ce que la direction de l'épaisseur du pouce (TB, TC) et la direction de la longueur de l'ongle du pouce (LB, LC) s'étendent respectivement dans des directions orthogonales à l'axe (Cr).

2. Véhicule de type à selle (1) selon la revendication 1, dans lequel le dispositif d'entrée (12) inclut une unité d'application de résistance (42a) configurée pour appliquer une résistance à la rotation du corps tournant (41).

3. Véhicule de type à selle (1) selon la revendication 2, dans lequel l'unité d'application de résistance (42a) est configurée pour augmenter ou diminuer la résistance appliquée au corps tournant (41) par rapport à la direction de rotation du corps tournant (41) de sorte à ce qu'une sensation de clic soit communiquée à toute opération de rotation du corps tournant (41) à des intervalles d'un angle prédéterminé.

4. Véhicule de type à selle (1) selon l'une quelconque des revendications 1 à 3, dans lequel, dans le corps tournant (41), la largeur (W) de la surface fonctionnelle (43) dans la direction de l'axe (Cr) croisant la direction longitudinale (G) de l'organe correspondant des organes de préhension (8a, 8b) est plus petite que la longueur (L) de la partie de la surface fonctionnelle (43) qui est exposée vers l'extérieur du boîtier (30) dans la direction orthogonale à la largeur (W) lorsqu'elle est vue depuis une direction orthogonale à un plan reliant directement les deux terminaisons circonférentielles de la partie de la surface fonctionnelle (43) qui est exposée vers l'extérieur du boîtier (30).

5. Véhicule de type à selle (1) selon l'une quelconque des revendications 1 à 4, dans lequel :
toute la surface circonférentielle externe du corps tournant (41) forme la surface fonctionnelle (43), et
au moins une partie de chacune des deux surfaces terminales du corps tournant (41) qui croise l'axe (Cr) entourant la direction longitudinale (G) de l'organe correspondant des organes de préhension (8a, 8b) est exposée à l'extérieur du boîtier (30).

6. Véhicule de type à selle (1) selon l'une quelconque des revendications 1 à 5, dans lequel :
la surface fonctionnelle (43) du corps tournant (41) est une surface inégale sur laquelle, en service, sont agencés des évidements (44) et des protubérances alternativement les uns avec les autres dans la direction de flexion ou d'extension du pouce de la main saisissant l'organe correspondant des organes de préhension (8a, 8b),
et
la largeur de rainure de chaque évidement (44) dans la direction de flexion ou d'extension est conçue pour permettre de pousser un bord de l'évidement (44) avec le pouce de la main saisissant l'organe correspondant des organes de préhension (8a, 8b).

7. Véhicule de type à selle (1) selon la revendication 6, dans lequel une pluralité de petits évidements présentant chacun une largeur de rainure plus petite que celle de chacun des évidements (44) est formée sur la surface fonctionnelle (43) du corps tournant (41).

8. Véhicule de type à selle (1) selon l'une quelconque des revendications 1 à 7, dans lequel le corps tournant (41) est configuré pour pouvoir être manoeuvré en poussant le corps tournant (41) avec le pouce de la main saisissant l'organe correspondant des organes de préhension (8a, 8b) dans une direction prédéterminée orthogonale à l'axe (Cr) croisant la direction longitudinale (G) de l'organe correspondant des organes de préhension (8a, 8b).

9. Véhicule de type à selle (1) selon l'une quelconque des revendications 1 à 8, dans lequel :
la partie de la surface fonctionnelle (43) qui est exposée à l'extérieur du boîtier (30) est positionnée vers l'arrière de l'axe central de l'organe correspondant des organes de préhension (8a, 8b) dans l'hypothèse où la direction allant de l'ongle jusqu'au côté palmaire du pouce qui appartient à la main saisissant l'organe correspondant des organes de préhension (8a, 8b) et qui s'étend dans la direction longitudinale de l'organe correspondant des organes de préhension (8a, 8b) représente la direction vers l'avant, et que la direction opposée à la direction vers l'avant se dirige vers l'arrière, et
le corps tournant (41) peut tourner autour de l'axe (Cr) croisant la direction longitudinale (G) de l'organe correspondant des organes de préhension (8a, 8b) lorsque l'on regarde le dispositif d'entrée (12) dans la direction vers l'avant.
